# FASCICULE DE BREVET EUROPEEN

(11) **EP 2 514 246 B1**
(45) Date de publication et mention de la délivrance du brevet: **25.06.2014**
(21) Numéro de dépôt: 10809009.3
(22) Date de dépôt: 14.12.2010
(51) Int. Cl.: H04W 28/06, H04W 28/04, H04W 88/04, H04W 84/18

(54) **Procédé de transmission d'un signal de communication perfectionné**
Verbessertes Verfahren zur Übertragund eines Kommunikationssignals
Improved method for transmitting a communication signal

(30) Priorité: 14.12.2009 FR 0958962
(43) Date de publication de la demande: 24.10.2012
(73) Titulaire: Orange, 75015 Paris (FR)
(72) Inventeur: MISCOPEIN, Benoît, F-38000 Grenoble (FR); SCHWOERER, Jean, F-Grenoble 38000 (FR)
(74) Mandataire: Cabinet Plasseraud
(86) Numéro de dépôt international: PCT/FR2010/052714
(87) Numéro de publication internationale: WO 2011/080451

(56) Documents cités:
- WO-A2-2010/018521
- HURNI P ET AL: "Increasing Throughput for WiseMAC", WIRELESS ON DEMAND NETWORK SYSTEMS AND SERVICES, 2008. WONS 2008. FIFTH ANNUAL CONFERENCE ON, IEEE, PISCATAWAY, NJ, USA, 23 janvier 2008 (2008-01-23), pages 105-108, XP031234399, ISBN: 978-1-4244-1958-6
- BENOIT MISCOPEIN ET AL: "Cooperative beacon-free MAC layer for body area networks", PERSONAL, INDOOR AND MOBILE RADIO COMMUNICATIONS, 2009 IEEE 20TH INTERNATIONAL SYMPOSIUM ON, IEEE, PISCATAWAY, NJ, USA, 13 septembre 2009 (2009-09-13), pages 2157-2161, XP031659988, ISBN: 978-1-4244-5122-7

## Description

La présente invention se rapporte de manière générale à la transmission de signaux de communication dans un réseau de noeuds. En particulier, elle s'applique aux réseaux ad hoc, comme par exemple les réseaux de capteurs.

Dans un réseau formé par une pluralité de noeuds, différentes approches peuvent être suivies pour mettre en veille les noeuds afin de réduire efficacement leur consommation électrique. Il est par exemple possible de mettre en état d'endormissement les moyens de réception des noeuds sur des périodes au cours desquelles ces derniers ne transmettent ou ne reçoivent pas de données des autres noeuds. Les noeuds ne peuvent donc transmettre des données ou en recevoir qu'au cours de leurs périodes d'éveil. Ces périodes d'éveil ne sont généralement pas synchronisées entre les noeuds. On comprend donc que le choix d'un protocole d'accès au canal adapté à ces contraintes revêt une importance particulière lorsqu'il s'agit d'économiser les ressources énergétiques disponibles au niveau de chaque noeud du réseau.

En particulier, les protocoles d'accès au canal dits à échantillonnage de préambule reposent sur le principe de l'émission sur un canal d'un préambule par un noeud émetteur disposant de données à transmettre à un noeud récepteur. Périodiquement, sur une brève période, les moyens de réception du noeud récepteur sont activés, de façon asynchrone par rapport à ceux des autres noeuds. Le noeud récepteur écoute alors le canal pour déterminer si un préambule est en cours d'émission. Typiquement, le noeud récepteur écoute la fin du préambule pour accéder aux données. Les noeuds d'un même réseau partageant la même période d'écoute du canal, le noeud émetteur envoie un préambule au moins aussi long que cette période d'écoute. Tous les noeuds au voisinage du noeud émetteur sont donc réveillés par le préambule émis par le noeud émetteur, ce qui induit une consommation d'énergie inutile. Le noeud émetteur peut également insérer des données dans le préambule pour permettre au noeud récepteur, de déterminer si ledit préambule le concerne, si des données vont lui être transmises et à quelle période cette transmission aura lieu. Le noeud récepteur peut ainsi gérer en conséquence l'état d'endormissement de ses moyens de réception.

Les protocoles d'accès au canal à échantillonnage de préambule sont bien adaptés aux réseaux de capteurs, caractérisés par un faible débit. En effet, les ressources énergétiques des capteurs étant généralement limitées, une telle gestion de l'accès au canal permet d'observer des réductions significatives de la consommation énergétique, résultant de l'endormissement périodique des moyens de réception des noeuds. Ces gains sont d'autant plus sensibles que le trafic généré par de tels capteurs est typiquement sporadique.

En outre, l'architecture des réseaux de capteurs est typiquement bâtie autour de noeuds puits, chargés de collecter les données émises par des groupes de noeuds capteurs. Aussi, une proportion significative des données émises sur le réseau converge vers les noeuds puits.

Or, les protocoles d'accès au canal à échantillonnage de préambule connus prévoient l'envoi d'un préambule, par chaque noeud capteur souhaitant transmettre des données à un des noeuds puits. Lorsqu'un grand nombre de noeuds capteurs disposent de données à transmettre sur une plage temporelle réduite, un nombre important de préambules sont donc également émis. D'une part, ce comportement s'avère énergétiquement peu satisfaisant, chaque émission de préambule nécessitant la consommation par les noeuds capteurs d'une quantité d'énergie. D'autre part, le risque de collision lors de l'accès au canal au cours de cette période est notablement accru.

Il existe donc un besoin pour transmettre, sur un canal, des données depuis une pluralité de noeuds émetteur vers au moins un noeud récepteur, en minimisant la consommation électrique des différents noeuds émetteur et en réduisant le risque de collisions lors de l'accès au canal par les noeuds émetteurs.

Dans la technologie décrite dans HURNI P ET AL: "Increasing Throughput for WiseMAC", plusieurs noeuds émetteurs peuvent émettre des données vers un noeud destinataire sans émettre à leur tour un autre préambule puisque le noeud destinataire, à l'issue de la réception d'un premier ensemble de données, signifie sa promesse de rester éveillé à l'attente de recevoir d'autres données.

La technologie du document BENOIT MISCOPEIN ET AL: "Cooperative beacon-free MAC layer for body area networks" décrit un mécanisme de relais de l'émission d'un préambule initial précédant la transmission, par un noeud émetteur, de données à destination d'un noeud destinataire. Lors du relais du préambule, le préambule est modifié à chaque relais. La formation du préambule au cours du relais comporte la modification de l'information comprise dans le préambule émis au cours du relais précédent et qui correspond au temps restant avant la transmission des données ou au nombre de relais avant la transmission des données. L'information contenue dans ce préambule, modifiée à chaque relais, permet au noeud destinataire, lorsqu'il détecte un préambule, de déterminer à quel moment il va recevoir les données qui lui sont destinées.

La présente invention vise à améliorer la situation. L'invention est dirigée vers l'objet des revendications ci-jointes.

Selon un premier aspect, il est proposé un procédé de transmission de données selon la revendication 1 permettant notamment à des noeuds relayant le préambule émis par un noeud émetteur d'émettre également des données à destination d'un même noeud destinataire, sans émettre à leur tour un autre préambule.

Le procédé permet de mutualiser un même préambule pour signifier la transmission ultérieure de plusieurs ensembles de données. Sur une période réduite, un nombre inférieur de préambules est donc in fine envoyé sur le canal, limitant d'une part la consommation électrique des noeuds, et d'autre part l'occupation du canal et donc le risque de collision.

Le noeud voisin a la possibilité de communiquer via le même premier préambule son intention de transmettre des données à un autre noeud, y compris à un autre noeud voisin, sans émission d'un préambule supplémentaire, ce qui est en particulier bien adapté lorsque le trafic sur le réseau est soutenu.

De manière optionnelle, le premier préambule peut comprendre une indication relative à un mode de mutualisation de préambule, ladite indication appartenant à un groupe comprenant un mode de mutualisation à unique destinataire et un mode de mutualisation à plusieurs destinataires. Le noeud voisin a ainsi connaissance du mode de mutualisation de préambule utilisé pour cette transmission et peut adapter son comportement en conséquence.

Dans un mode de réalisation, lorsque l'indication relative à un mode de mutualisation de préambule correspond au mode de mutualisation à unique destinataire, le deuxième ensemble d'informations ajouté est relatif à une transmission du deuxième ensemble de données par le premier noeud vers le noeud destinataire. Le deuxième ensemble de données est transmis au noeud destinataire au cours de l'étape de transmission, vers le noeud destinataire ou vers le deuxième noeud, du deuxième ensable de données à l'issue de la transmission du premier ensemble de données.

Selon un deuxième aspect, il est proposé un dispositif de transmission de données selon la revendication 4.

Selon un troisième aspect, il est proposé un procédé de réception par un noeud d'un préambule selon la revendicaton 5, transmis par au moins un premier noeud par un procédé selon le premier aspect. Le procédé comporte les étapes suivantes, réalisées par ledit noeud:
- réception du préambule ;
- extraction d'informations comprises dans le préambule annonçant au moins la transmission du premier et du deuxième ensemble de données à un noeud destinataire ;
- si le noeud est le noeud destinataire annoncé dans le préambule, réception du premier et du deuxième ensemble de données.
Le procédé de réception peut comprendre une étape optionnelle d'attente d'autres ensembles de données suite à la transmission des premier et deuxième ensembles de données.

Dans un mode de réalisation, le procédé comprend les étapes suivantes :
- extraction d'informations comprises dans le préambule comprenant une indication relative au mode de mutualisation de préambule, ladite indication appartenant à un groupe comprenant un mode de mutualisation à unique destinataire et un mode de mutualisation à plusieurs destinataires ;
- si le noeud n'est pas le noeud destinataire, endormissement pour une période calculée en fonction de ladite indication.

De manière optionnelle, si le noeud n'est pas le noeud destinataire annoncé et si le mode de mutualisation du préambule indiqué est à plusieurs destinataires, ledit procédé peut comprendre les étapes suivantes :
- endormissement jusqu'au début de la transmission du premier ensemble de données ;
- réception de données descriptives en provenance du noeud émetteur ;
- si les données descriptives comportent des informations indiquant que le noeud est le destinataire d'un ensemble de données, réception dudit ensemble de données.
Le procédé peut alors comprendre également une étape d'endormissement après la réception des données descriptives si les données descriptives ne comportent aucune information relative à la transmission d'un ensemble de données au noeud.

Selon un quatrième aspect, il est proposé un dispositif de réception d'un préambule, selon la revendication 10 transmis par au moins un premier noeud par un procédé selon le premier aspect comportant :
- des moyens de réception du préambule;
- des moyens d'extraction d'informations comprises dans le préambule annonçant au moins la transmission du premier et du deuxième ensemble de données à un destinataire ;
- des moyens de réception aptes à recevoir le premier et le deuxième ensemble de données, si le dispositif est le destinataire annoncé dans le préambule.

L'invention concerne aussi un noeud comportant des moyens adaptés à mettre en oeuvre le procédé de transmission selon le premier aspect, et le procédé de réception selon le troisième aspect.

Dans un mode particulier de réalisation, les différentes étapes des procédés de transmission et de réception selon l'invention sont déterminées par des instructions de programmes d'ordinateurs.

En conséquence, l'invention vise aussi des programmes d'ordinateur sur un support d'informations, ces programmes étant susceptibles d'être mis en oeuvre respectivement dans des noeuds ou plus généralement dans un ordinateur, ces programmes comportant respectivement des instructions adaptées à la mise en oeuvre des étapes des procédés de transmission, de réception par un noeud destinataire et de réception par un noeud voisin qui viennent d'être décrits.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre, par un chronogramme, le principe de fonctionnement, selon un premier mode de réalisation, d'un mode de transmission d'un signal de communication reposant sur une technique d'endormissement des noeuds avec échantillonnage de préambule ;
- la figure 2 illustre, par un chronogramme, le principe de fonctionnement, selon un deuxième mode de réalisation, d'un mode de transmission d'un signal de communication reposant sur une technique d'endormissement des noeuds avec échantillonnage de préambule ;
- la figure 3 illustre, par un chronogramme, une gestion de conflit entre deux noeuds voisins aptes à émettre un préambule ;
- la figure 4, illustre, par un chronogramme, le principe de fonctionnement, selon un mode de réalisation, d'un mode de transmission de données par un noeud voisin n'ayant pas transmis de préambule ;
- la figure 5 illustre, par un schéma fonctionnel, un noeud.

Dans la description qui suit, on considère un réseau de communication comportant une pluralité de noeuds. Les signaux de communication transmis d'un noeud émetteur à un noeud destinataire, via des noeuds voisins, peuvent correspondre à un préambule ou à des données. Le mode de transmission utilisé repose sur une technique d'endormissement des noeuds avec échantillonnage de préambule.

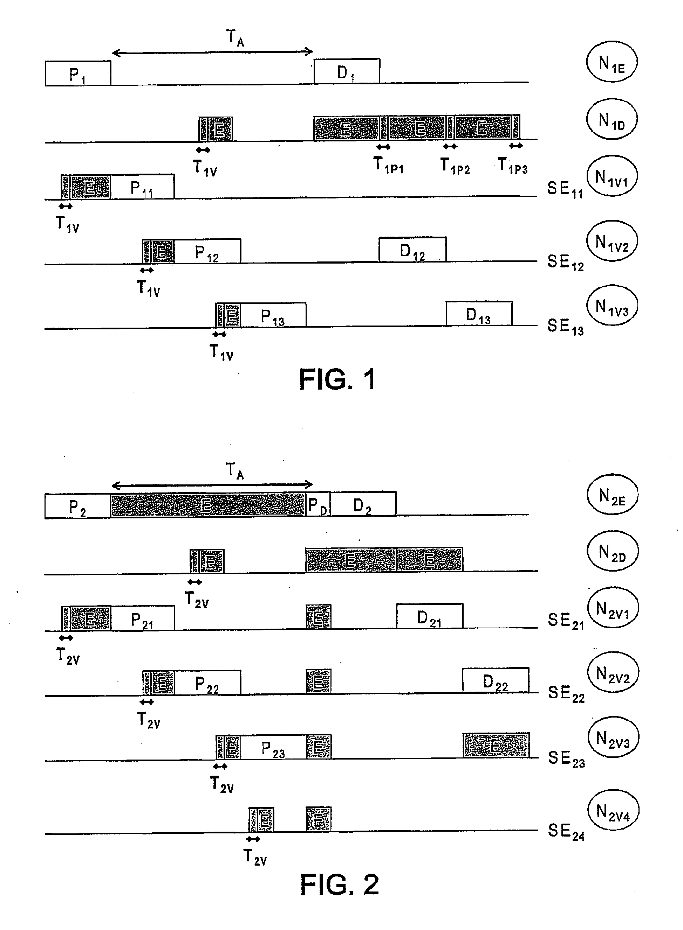

La figure 1 représente le principe de fonctionnement, selon un premier mode de réalisation, d'un mode de transmission d'un signal de communication reposant sur une technique d'endormissement des noeuds avec échantillonnage de préambule. Ce premier mode de réalisation permet notamment à des noeuds relayant le préambule émis par un noeud émetteur d'émettre également des données à destination d'un même noeud destinataire, sans émettre à leur tour un autre préambule. Un noeud émetteur N_{1E} transmet des données D₁ à un noeud destinataire N_{1D}. Ces étapes de transmission sont précédées par une étape d'émission d'un préambule initial P₁. Le préambule P₁ comporte un ensemble d'informations permettant de déterminer à quel noeud sont destinées les données D₁ et quand ces dernières vont être transmises par le noeud émetteur N_{1E}. Cet ensemble d'informations peut ainsi comporter une ou plusieurs informations parmi la liste suivante : l'identification du noeud destinataire N_{1D}, une indication relative à un mode de mutualisation de préambule, l'adresse du noeud destinataire N_{1D}, le temps restant avant la transmission des données D₁, la période au cours de laquelle seront transmises les données D₁, l'instant correspondant au début de la transmission des données D₁, ou l'adresse du noeud émetteur N_{1E}. Le mode de mutualisation de préambule est par exemple choisi parmi un groupe comprenant un mode de mutualisation de préambule à unique destinataire et un mode de mutualisation de préambule à plusieurs destinataires. Le mode de mutualisation de préambule à unique destinataire correspond alors à un mode dans lequel les noeuds voisins sont autorisés à adresser des données uniquement au noeud destinataire N_{2D}. Le mode de mutualisation de préambule à plusieurs destinataires correspond à un mode dans lequel les noeuds voisins sont autorisés à adresser des données à tout autre noeud du réseau.

En particulier, les informations temporelles, comme le temps restant avant la transmission des données D₁, la période au cours de laquelle seront transmises les données D₁, ou l'instant correspondant au début de la transmission des données D₁ peuvent être exprimées en nombre de temps symbole de modulation, les temps symbole de modulation étant communs à tous les noeuds du réseau.

Ces informations peuvent être situées en fin de préambule ou être répétées tout au long de l'émission préambule.

La durée du préambule initial P₁ est très inférieure à la période d'endormissement d'un noeud. A titre d'exemple, la durée du préambule P₁ est de l'ordre de quelques millisecondes. Par exemple, la durée du préambule initial P₁ est inférieure à cinq millisecondes pour satisfaire les règles définies par la réglementation des systèmes à très large bande de fréquences, dit « Ultra Wide Band » en anglais, appliquée dans certains pays.

A titre d'exemples non limitatifs de l'invention, la figure 1 fait apparaître trois sous-étapes SE₁₁, SE₁₂ et SE₁₃, réalisées respectivement par les noeuds voisins N_{1V1}, N_{1V2}, et N_{1V3} du noeud émetteur N_{1E}.

Au cours d'une sous-étape SE₁₁, le noeud voisin N_{1V1}, éveillé pendant un instant T_{1V} alors que le préambule initial P₁ est émis par le noeud émetteur N_{1E}, détecte le préambule P₁ et reçoit l'ensemble d'informations compris dans le préambule P₁. Le noeud voisin N_{1V1} reste en état d'éveil E jusqu'à la fin de l'émission du préambule initial P₁ par le noeud émetteur N_{1E}. Puis, le noeud voisin N_{1V1} émet à son tour un préambule P₁₁. Dans l'exemple de la figure 1, le noeud voisin N_{1V1} ne dispose d'aucune donnée à transmettre au noeud destinataire N_{1D}. Si le préambule P₁ comporte une indication relative à un mode de mutualisation de préambule, le noeud voisin N_{1V1} peut prendre connaissance du mode de mutualisation de préambule. Ainsi, dans l'exemple illustré à la figure 1, correspondant à un mode de mutualisation de préambule à unique destinataire, le noeud voisin N_{1V1} peut déterminer qu'il n'est pas autorisé à transmettre des données au noeud destinataire N_{1V3}, en utilisant le préambule P₁.

Le préambule P₁₁ émis par le noeud N_{1V1} comprend l'ensemble des informations compris dans le préambule P₁. Les informations temporelles comme le temps restant avant la transmission des données D₁ sont, si nécessaire, mises à jour par le noeud N_{1V1}.

Au cours d'une sous-étape SE₁₂, le noeud voisin N_{1V2}, éveillé pendant un instant T_{1V} alors que le préambule P₁₁ est émis par le noeud voisin N_{1V1}, détecte le préambule P₁₁ et reçoit l'ensemble d'informations compris dans le préambule P₁₁. Le noeud voisin N_{1V2} dispose de données D₁₂ à transmettre au noeud destinataire N_{1D}. Le noeud voisin N_{1V2} reste en état d'éveil E au moins jusqu'à la fin de l'émission du préambule P₁₁ par le noeud voisin N_{1V1}. A la lecture du préambule P₁₁, le noeud voisin N_{1V2} peut ainsi déterminer que le noeud émetteur N_{1E} va émettre des données et à quelle période cette transmission aura lieu. Puis, le noeud voisin N_{1V2} émet à son tour un préambule P₁₂ modifié. Le préambule P₁₂ comprend l'ensemble des informations compris dans le préambule P₁₁. Les informations temporelles comme le temps restant avant la transmission des données D₁ sont, si nécessaire, mises à jour par le noeud N_{1V2}. Le préambule P₁₂ comprend également une information indiquant que le noeud voisin N_{1V2} souhaite transmettre à destination du noeud destinataire N_{1D} des données, comme par exemple l'adresse du noeud voisin N_{1V2}.

Au cours d'une sous-étape SE₁₃, le noeud voisin N_{1V3}, éveillé pendant un instant T_{V} alors que le préambule P₁₂ est émis par le noeud voisin N_{1V2}, détecte le préambule P₁₂ et reçoit l'ensemble d'informations compris dans le préambule P₁₂. Le noeud voisin N_{1V3} dispose de données D₁₃ à transmettre au noeud destinataire N_{1D}. Le noeud voisin N_{1V3} reste en état d'éveil E au moins jusqu'à la fin de l'émission du préambule P₁₂ par le noeud voisin N_{1V2}. A la lecture du préambule P₁₃, le noeud voisin N_{1V3} peut ainsi déterminer que le noeud émetteur N_{1E} et le noeud voisin N_{1V2} vont émettre des données et à quelles périodes ces transmission auront lieu. Puis, le noeud voisin N_{1V3} émet à son tour un préambule P₁₃ modifié.

Le préambule P₁₃ comprend l'ensemble des informations compris dans le préambule P₁₂. Les informations temporelles comme le temps restant avant la transmission des données D₁ sont, si nécessaire, mises à jour par le noeud voisin N_{1V3}. Le préambule P₁₃ comprend également une information indiquant que le noeud voisin N_{1V3} souhaite transmettre des données, à la suite du noeud voisin N_{1V3}, à destination du noeud destinataire N_{1D}, comme par exemple l'adresse du noeud voisin N_{1V3} introduit à la suite de l'adresse du noeud voisin N_{1V2}. Dans ce dernier exemple, le préambule P₁₃ comporte une séquence ordonnée d'adresses de noeuds voisins souhaitant émettre des données à destination du noeud destinataire N_{1D}.

Au bout d'un temps d'attente T_{A} au moins égal à une période d'endormissement d'un noeud, le noeud émetteur N_{1E} transmet les données D₁. Le noeud voisin N_{1V2} transmet les données D₁₂ sensiblement immédiatement après la fin de l'émission données D₁ par le noeud émetteur N_{1E}. Puis, le noeud voisin N_{1V3} transmet les données D₁₃ sensiblement immédiatement après la fin de l'émission données D₁₂ par le noeud voisin N_{1V2}, La transmission des données D₁₂ et D₁₃ s'effectuent dans l'ordre de déclaration par les noeuds voisins de leur intention de transmettre des données. Ainsi, le noeud voisin N_{1V2} ayant transmis, avant le noeud voisin N_{1V3}, un préambule comportant une information indiquant qu'il souhaitait émettre des données à destination du noeud destinataire N_{1D}, les données D₁₂ sont transmises avant les données D₁₃.

Le temps d'attente T_{A} dépend, entre autres, de la période d'endormissement des noeuds et est au moins égal à cette période d'endormissement. Si le noeud destinataire N_{1D} est éveillé lors de l'émission d'un des préambules P₁, P₁₁, P₁₂, P₁₃, il peut identifier que les données D₁ lui sont destinées et à quel moment elles doivent être transmises.

Après la fin de l'émission des données D₁, le noeud destinataire N_{1D} reste éveillé tant que des données lui sont transmises par des noeuds. Pour cela, le noeud destinataire N_{1D} peut obtenir cette information à la lecture des préambules reçus si ces derniers comportent au moins une information indiquant qu'au moins un noeud voisin souhaite transmettre des données à destination du noeud destinataire N_{1D}. Le noeud destinataire peut également rester éveillé pendant une période de temporisation T_{1P1} suivant la réception des données D₁ pour vérifier si aucune autre donnée ne lui est adressée. Ainsi, si au cours de la période de temporisation T_{1P1} des données à destination du noeud destinataire N_{1D} sont reçues, alors le noeud destinataire N_{1D} reste éveillé jusqu'à l'expiration d'une nouvelle période de temporisation T_{1P2} suivant la fin de la réception desdites données. Une nouvelle période d'endormissement du noeud destinataire N_{1D} débute seulement si aucune donnée n'est reçue à l'issue de la nouvelle période de temporisation T_{1P3}. Le noeud destinataire N_{1D} reste donc éveillé, suivant un enchainement de périodes de réception de données puis de périodes de temporisation, tant que des données lui sont transmises. Dans l'exemple de la figure 1, après la fin de l'émission des données D₁, au moins une partie des données D₁₂ transmises par le noeud voisin N_{1V2} sont reçues au cours de la période de temporisation T_{1P1}. Une nouvelle période de temporisation T_{1P2} débute après la fin de la transmission des données D₁₂. Au moins une partie des données D₁₃ transmises par le noeud voisin N_{1V3} sont reçues au cours de la période de temporisation T_{1P2}. Une nouvelle période de temporisation T_{1P3} débute après la fin de la transmission des données D₁₃. A la fin de la période de temporisation T_{1P3}, aucune donnée n'ayant été reçues, le noeud destinataire N_{D} peut alors se rendormir.

La figure 2 représente le principe de fonctionnement, selon un deuxième mode de réalisation, d'un mode de transmission d'un signal de communication reposant sur une technique d'endormissement des noeuds avec échantillonnage de préambule. Ce deuxième mode de réalisation permet notamment à des noeuds relayant le préambule émis par un noeud émetteur d'émettre également des données à destination d'un noeud quelconque du réseau, sans émettre à leur tour un autre préambule. Ce deuxième mode est en outre bien adapté lorsque le trafic sur le réseau est soutenu.

Un noeud émetteur N_{2E} transmet des données D₂ à un noeud destinataire N_{2D}.

Ces étapes de transmission sont précédées par une étape d'émission d'un préambule initial P₂. Le préambule P₂ comporte un ensemble d'informations permettant de déterminer à quel noeud sont destinées les données D₁ et quand ces dernières vont être transmises par le noeud émetteur N_{2E}. Cet ensemble d'information peut ainsi comporter une ou plusieurs informations parmi la liste suivante : l'identification du noeud destinataire N_{2D}, une indication relative à un mode de mutualisation de préambule, l'adresse du noeud destinataire N_{2D}, le temps restant avant la transmission de données, la période au cours de laquelle seront transmises les données D₂, l'instant correspondant au début de la transmission des données D₂, ou l'adresse du noeud émetteur N_{2E}. Le mode de mutualisation de préambule est par exemple choisi parmi un groupe comprenant un mode de mutualisation de préambule à unique destinataire et un mode de mutualisation de préambule à plusieurs destinataires. Le mode de mutualisation de préambule à unique destinataire correspond alors à un mode dans lequel les noeuds voisins sont autorisés à adresser des données uniquement au noeud destinataire N_{2D}. Le mode de mutualisation de préambule à plusieurs destinataires correspond alors à un mode dans lequel les noeuds voisins sont autorisés à adresser des données à tout autre noeud du réseau.

En particulier, les informations temporelles, comme le temps restant avant la transmission des données D₂, la période au cours de laquelle seront transmises les données D₂, ou l'instant correspondant au début de la transmission des données D₂ peuvent être exprimées en nombre de temps symbole de modulation, les temps symbole de modulation étant communs à tous les noeuds du réseau.

Ces informations peuvent être situées en fin de préambule ou être répétées tout au long de l'émission préambule.

La durée du préambule initial P₂ est très inférieure à la période d'endormissement d'un noeud. A titre d'exemple, la durée du préambule P₂ est de l'ordre de quelques millisecondes. Par exemple, la durée du préambule initial P₂ est inférieure à cinq millisecondes pour satisfaire les règles définies par la réglementation des systèmes à très large bande de fréquences, dit « Ultra Wide Band » en anglais, appliquée dans certains pays.

A titre d'exemples non limitatifs de l'invention, la figure 2 fait apparaître trois sous-étapes SE₂₁, SE₂₂, SE₂₃, et SE₂₄, réalisées respectivement par les noeuds voisins N_{2V1}, N_{2V2}, N_{2V3}, et N_{2V4} du noeud émetteur N_{2E}. Au cours de l'ensemble des sous-étapes, le noeud émetteur N_{2E} reste à l'écoute des émissions des noeuds voisins, en particulier de l'ensemble des préambules émis.

Au cours d'une sous-étape SE₂₁, le noeud voisin N_{2V1}, éveillé pendant un instant T_{2V} alors que le préambule initial P₂ est émis par le noeud émetteur N_{2E}, détecte le préambule P₂ et reçoit l'ensemble d'informations compris dans le préambule P₂. Le noeud voisin N_{2V1} reste en état d'éveil E jusqu'à la fin de l'émission du préambule initial P₂ par le noeud émetteur N_{2E}. Puis, le noeud voisin N_{2V1} émet à son tour un préambule P₂₁. Dans l'exemple de la figure 2, le noeud voisin N_{2V1} dispose de données D₂₁ à transmettre au noeud destinataire N_{2D}. Le noeud voisin N_{2V1} peut ensuite s'endormir, avant d'entrer en état d'éveil au moment où le noeud émetteur N_{2E} va émettre des données.

Le préambule P₂₁ émis par le noeud N_{2V1} comprend l'ensemble des informations compris dans le préambule P₂. Les informations temporelles comme le temps restant avant la transmission de données par le noeud émetteur N_{2E} sont, si nécessaire, mises à jour par le noeud N_{2V1}. Le préambule P₂₁ comprend également une information indiquant que le noeud voisin N_{2V1} souhaite transmettre à destination du noeud destinataire N_{2D} des données. Cette information est par exemple l'adresse du noeud voisin N_{2V1} dans le préambule P₂₁.

Au cours d'une sous-étape SE₂₂, le noeud voisin N_{2V2,} éveillé pendant un instant T_{2V} alors que le préambule P₂₁ est émis par le noeud voisin N_{2V1}, détecte le préambule P₂₁ et reçoit l'ensemble d'informations compris dans le préambule P₂₁. Le noeud voisin N_{2V2} dispose de données D₂₃ à transmettre au noeud voisin N_{2V3}. Si le préambule P₂₁ comporte une indication relative à un mode de mutualisation de préambule, le noeud voisin N_{2V2} peut prendre connaissance du mode de mutualisation du préambule. Ainsi, dans l'exemple illustré à la figure 2, correspondant à un mode de mutualisation de préambule à destinataires multiples, le noeud voisin N_{2V2} peut déterminer qu'il est autorisé à transmettre des données au noeud destinataire N_{2V3}, en utilisant le préambule P₂₁.

Le noeud voisin N_{2V2} reste en état d'éveil E jusqu'à la fin de l'émission du préambule P₂₁ par le noeud voisin N_{2V1}. A la lecture du préambule P₂₁, le noeud voisin N_{2V2} peut ainsi déterminer que le noeud émetteur N_{2E} et le noeud voisin N_{2V1} vont émettre des données et à quelles périodes ces transmissions auront lieu. Puis, le noeud voisin N_{2V2} émet à son tour un préambule P₂₂ modifié. Le noeud voisin N_{2V2} peut ensuite s'endormir, avant d'entrer en état d'éveil au moment où le noeud émetteur N_{2E} va émettre des données.

Le préambule P₂₂ comprend l'ensemble des informations compris dans le préambule P₂₁. Les informations temporelles comme le temps restant avant la transmission des données D₂ sont, si nécessaire mises à jour. Le préambule P₁₂ comprend également une information indiquant que le noeud voisin N_{2V2} souhaite transmettre à destination du noeud voisin N_{2V3} des données, comme par exemple la concaténation de l'adresse du noeud voisin N_{2V2} suivie de l'adresse du noeud voisin N_{2V3} dans le préambule P₂₂.

Au cours d'une sous-étape SE₂₃, le noeud voisin N_{2V3}, éveillé pendant un instant T_{2V} alors que le préambule P₂₂ est émis par le noeud voisin N_{2V2,} détecte le préambule P₂₂ et reçoit l'ensemble d'informations compris dans le préambule P₂₂. Le noeud voisin N_{2V3} ne dispose d'aucune donnée à transmettre à un autre noeud. Le noeud voisin N_{2V3} reste en état d'éveil E. jusqu'à la fin de l'émission du préambule P₂₂ par le noeud voisin N_{2V2}. Puis, le noeud voisin N_{2V3} émet à son tour un préambule P₂₃ modifié. A la lecture du préambule P₂₂, le noeud voisin N_{2V3} peut ainsi déterminer que le noeud émetteur N_{2E} et que le noeud voisin N_{2V2} vont émettre des données et à quelles périodes ces transmissions auront lieu. Puis, le noeud voisin N_{2V3} émet à son tour un préambule P₂₃ modifié. Le noeud voisin N_{2V3} peut ensuite s'endormir, avant d'entrer en état d'éveil au moment où le noeud émetteur N_{2E} va émettre des données.

Au cours d'une sous-étape SE₂₄, le noeud voisin N_{2V4}, éveillé pendant un instant T_{2V} alors que le préambule P₂₃ est émis par le noeud voisin N_{2V2}, détecte le préambule P₂₃ et reçoit l'ensemble d'informations compris dans le préambule P₂₃. Le noeud voisin N_{2V4} ne dispose d'aucune donnée à transmettre à un autre noeud. Le noeud voisin N_{2V3} reste en état d'éveil E jusqu'à la fin de l'émission du préambule P₂₂ par le noeud voisin N_{2V2}. Dans l'exemple de la figure 2, le noeud voisin N_{2V3} ne relaye pas le préambule P₂₃, car l'émission de ensemble de données D₂ va débuter au temps symbole de modulation suivant. A la lecture du préambule P₂₃, le noeud voisin N_{2V4} peut ainsi notamment déterminer que le noeud émetteur N_{2E} va émettre des données et à quelle période cette transmission aura lieu. Le noeud voisin N_{2V3} peut ensuite s'endormir, avant d'entrer en état d'éveil au moment où le noeud émetteur N_{2E} va émettre des données.

Ainsi, au bout d'un temps d'attente T_{A} au moins égal à une période d'endormissement d'un noeud, les noeuds voisins N_{2V1}, N_{2V2}, N_{2V3}, et N_{2V4} sont en état d'éveil et le noeud émetteur N_{2E} transmet dans un premier temps des données descriptives P_{D}. Si les préambules P₂, P₂₁, P₂₂ et P₂₃ comportent une indication relative à un mode de mutualisation de préambule à destinataires multiples, les noeuds voisins N_{2V1}, N_{2V2}, N_{2V3}, et N_{2V4} ont connaissance de cette transmission des données descriptives dès la réception desdits préambules.

Au cours des sous-étapes SE₂₁, SE₂₂, SE₂₃ et SE₂₄, le noeud émetteur N_{2E} a précédemment reçu les préambules P₂₁, P₂₂ et P₂₃. Le noeud émetteur N_{2E} peut donc déterminer les périodes d'émission et les destinataires des différentes données à émettre. Les données descriptives P_{D} comportent ainsi des informations relatives aux différentes données à émettre, en particulier les différents émetteurs et destinataires, obtenues à partir des ensembles d'informations compris dans les différents préambules P₂₁, P₂₂ et P₂₃. Les noeuds voisins N_{2V1}, N_{2V2}, N_{2V3} et N_{2V4}, sont réveillés lorsque les données descriptives P_{D} sont émises. Par exemple, l'envoi des données D₂ est précédé de l'envoi des données descriptives P_{D}. Ainsi, les noeuds voisins N_{2V1}, N_{2V2,} N_{2V3} et N_{2V4} connaissant le début de la transmission des données émises par le noeud émetteur N2E, ils peuvent gérer leur état de réveil pour recevoir les données descriptives P_{D}. Les noeuds ayant reçus les données descriptives P_{D} peuvent ainsi gérer leur état d'éveil, de sorte à être dans un état d'éveil seulement lorsque des données leur seront transmises.

Dans l'exemple de la figure 2, les données descriptives P_{D} comportent au moins une information selon laquelle vont être transmises les données D₂ suivies des données D₂₁ au noeud destinataire, puis les données D₂₂ au noeud voisin N_{2V3}. A la lecture des données descriptives P_{D}, le noeud émetteur N_{2E} peut ainsi déterminer la période au cours de laquelle il doit demeurer en état d'éveil pour recevoir les données D₂ et D₂₁, et en conséquence les périodes au cours desquelles il pourra à nouveau s'endormir. A la lecture des données descriptives P_{D}, le noeud voisin N_{2V3} peut également déterminer la période au cours de laquelle il doit demeurer en état d'éveil pour recevoir les données D₂₂, et en conséquence les périodes au cours desquelles il pourra à nouveau s'endormir. A la lecture des données descriptives P_{D}, le noeud voisin N_{2V4} peut déterminer qu'aucune donnée ne lui sera transmise. Il peut donc rester en état de sommeil après la fin de la réception des données descriptives P_{D}.

Après avoir transmis les données descriptives P_{D}, le noeud émetteur N_{2E} transmet les données D₂. Le noeud voisin N_{2V1} transmet ensuite les données D₂₁, à la suite de la transmission des données D₂. Puis, le noeud voisin N_{2V2} émet à son tour les données D₂₂ à destination du noeud voisin N_{2V3} dès la fin de la transmission des données D₂₂.

L'invention comporte également une gestion de conflit lors du relais d'un préambule. Il s'agit de déterminer quel noeud voisin va relayer le préambule lorsqu'au moins deux noeuds voisins ont entendu le même préambule et sont prêts à le relayer. Cette détermination tient compte de l'instant d'éveil de chacun des noeuds voisins concernés relativement à l'émission du préambule.

Plus l'instant d'éveil d'un noeud voisin intervient tôt pendant l'émission du préambule, plus ce noeud est prioritaire pour relayer l'émission du préambule.

La durée d'émission d'un préambule est définie au préalable pour satisfaire, entre autres, des règles définies par un mode de transmission ou d'autres contraintes.

Par conséquent, un noeud voisin est capable de mesurer le temps résiduel entre l'instant où il s'éveille et entend le préambule et l'instant correspondant à la fin de l'émission du préambule.

Pour éviter un conflit avec un autre noeud voisin, un noeud voisin qui a entendu le préambule se met en situation d'écoute entre la fin d'émission du préambule et le moment où lui-même doit émettre le préambule. Si pendant ce délai d'attente, il n'entend pas le préambule c'est qu'aucun autre noeud voisin ne l'a émis et qu'il est le noeud voisin prioritaire pour assurer le relais et émettre le préambule.

Le délai d'attente d'un noeud avant qu'il émette le préambule est inversement proportionnel au temps pendant lequel il a écouté le préambule. Ce délai d'attente est également inférieur à un seuil prédéfini pour être sûr que le préambule est effectivement émis.

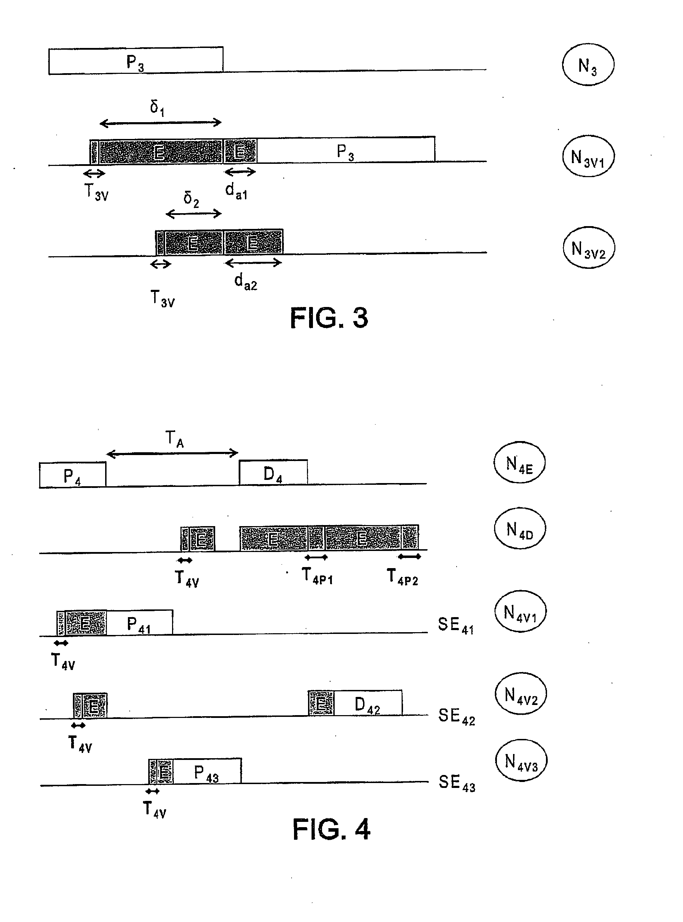

La figure 3 représente une gestion de conflit entre deux noeuds voisins aptes à émettre un préambule. Un noeud N₃ émet un préambule P₃. Le noeud N₃ peut être un noeud émetteur qui émet un préambule initial P₃ ou un noeud voisin qui relaie l'émission d'un préambule.

Deux noeuds voisins N_{3V1} et N_{3V2} entendent le préambule P₃ au cours de leurs instants d'éveil T_{3V} respectifs. Puis, les noeuds voisins N_{3V1} et N_{3V2} écoutent le préambule P₅ jusqu'à la fin d'émission de celui-ci pendant un temps respectivement δ₁ et δ₂.

Le noeud voisin N_{3V1} ayant écouté le plus longtemps l'émission du préambule P₃ (δ₁ étant supérieur δ₂) est le noeud prioritaire pour émettre le préambule P₃. Le délai d'attente dₐ₁ du noeud N_{3V1} avant qu'il émette à son tour le préambule P₃ est inférieur au délai d'attente dₐ₂ du noeud N_{3V2}.

Pendant le délai d'attente dₐ₂, le noeud N_{3V2} entend que le préambule est émis. Il n'a donc pas besoin de l'émettre et peut se rendormir.

Au lieu de se rendormir, le noeud N_{3V2} peut également écouter les relais successifs et intervenir pour émettre le préambule si le relais ne se déroule pas correctement notamment si celui-ci s'interrompt. En particulier, dans ce dernier cas, si le noeud N_{SV2} dispose de données à transmettre à un des noeuds, il pourra alors introduire les informations nécessaires dans le préambule pour que le noeud auquel sont destinées lesdites données puisse être informé de cette future transmission.

Le nombre de noeuds considérés pour décrire la gestion de conflit est illustratif et n'est pas limitatif de l'invention.

La figure 4 représente le principe de fonctionnement, selon un mode de réalisation, d'un mode de transmission de données par un noeud voisin n'ayant pas transmis de préambule. En particulier, un tel cas peut se présenter par exemple à la suite d'un arbitrage entre deux noeuds voisins, lors d'une gestion de conflit, le noeud n'ayant pas émis de préambule disposant de données à transmettre à un autre noeud.

Un noeud émetteur N_{4E} transmet des données D₄ à un noeud destinataire N_{1D}.

Ces étapes de transmission sont précédées par une étape d'émission d'un préambule initial P₄ comportant, entre autres, l'identification du noeud destinataire N_{4D}. A titre d'exemples non limitatifs de l'invention, la figure 4 fait apparaître trois sous-étapes SE₄₁, SE₄₂ et SE₄₃, réalisées respectivement par les noeuds voisins N_{4V1}, N_{4V2}, et N_{4V3} du noeud émetteur N_{4E}.

Au cours d'une sous-étape SE₄₁, le noeud voisin N_{4V1}, éveillé pendant un instant T_{V} alors que le préambule initial P₁ est émis par le noeud émetteur N_{1E}, détecte le préambule P₄.

Au cours d'une sous-étape SE₄₂, le noeud voisin N_{4V2}, éveillé pendant un instant T_{V} alors que le préambule initial P₁ est émis par le noeud émetteur N_{1E}, détecte le préambule P₄. Le noeud voisin N_{4V2} dispose de données D₄₂ à émettre vers le noeud destinataire N_{4D}.

Un mode de gestion de conflit, comme par exemple celui décrit précédemment, permet de rendre un arbitrage laissant le noeud voisin N_{4V1} en charge de l'émission d'un préambule P₄₁. Le noeud voisin N_{4V2} n'émet donc pas de préambule.

Au cours d'une sous-étape SE₄₃, le noeud voisin N_{4V3}, éveillé pendant un instant T_{V} alors que le préambule P₄₁ est émis par le noeud voisin N_{4V1}, détecte le préambule P₄₁. Puis, le noeud voisin N_{4V3} émet à son tour un préambule P₄₃ modifié.

Au bout d'un temps d'attente T_{A} au moins égal à une période d'endormissement d'un noeud, tous les noeuds disposant de données à transmettre et ayant émis au moins un préambule transmettent les différentes données. Dans l'exemple de la figure 4, seul le noeud émetteur N_{4E} transmet les données D₁. Le noeud voisin N_{4V2} n'ayant pu émettre de préambule, le noeud destinataire N_{4D} ne sait alors pas que le noeud voisin N_{4V2} dispose de données à transmettre.

Aussi, à l'issue de la transmission des différentes données depuis les noeuds disposant de données à transmettre et ayant émis au moins un préambule, le, noeud destinataire reste éveillé pendant une période de temporisation T_{4P1} pour vérifier si aucune autre donnée ne lui est adressée. Ainsi, si au cours de la période de temporisation T_{4P1} des données à destination du noeud destinataire N_{4D} sont reçues, alors le noeud destinataire N_{4D} reste éveillé jusqu'à l'expiration d'une nouvelle période de temporisation T_{4P2} suivant la fin de la réception desdites données. Une nouvelle période d'endormissement du noeud destinataire N_{4D} ne débute que si aucune donnée n'est reçue à l'issue de la nouvelle période de temporisation T_{4P2}. Le noeud destinataire N_{1D} reste donc éveillé, suivant un enchainement de périodes de réception de données puis de périodes de temporisation, tant que des données lui sont transmises. Dans l'exemple de la figure 4, après la fin de l'émission des données D₄, le noeud voisin N_{4V2} entre en état d'éveil pour écouter si des données à destination d'un des noeuds voisins sont transmises par un des autres noeuds voisins. Comme aucun autre noeud n'émet, le noeud voisin N_{4V2} transmet les données D₄₂ au noeud destinataire N_{4D}. Une nouvelle période de temporisation T_{4P2} débute après la fin de la transmission des données D₄₂. Aucune donnée n'ayant été transmises, le noeud destinataire N_{D} peut alors se rendormir.

L'exemple présenté se rapporte au cas où le noeud voisin N_{4V2} n'ayant pu émettre de préambule dispose de données à émettre au noeud destinataire N_{4D}. Toutefois, le principe de fonctionnement illustré à la figure 4 d'un mode de transmission de données par un noeud voisin n'ayant pas transmis de préambule s'applique de manière sensiblement similaire au cas où le noeud voisin N_{4V2} dispose de données à émettre vers un autre noeud, comme par exemple vers le noeud voisin N_{4V1} ou vers le noeud N_{4V3}.

Dans le cas, non représenté sur la figure 4, où plusieurs noeuds se trouvent dans la même situation que le noeud N_{4V2}, c'est-à-dire si plusieurs noeuds disposant de données pour le destinataire n'ont pas émis de préambule, il est possible de gérer un éventuel conflit entre ces noeuds en appliquant un procédé traditionnel de gestion de conflit, comme par exemple le mode d'accès par contention. Les noeuds évincés en conflit tirent une durée aléatoire pendant laquelle ils écoutent le canal ; si pendant cette période un des noeuds détecte une émission, il reporte l'émission de son paquet, sinon il émet.

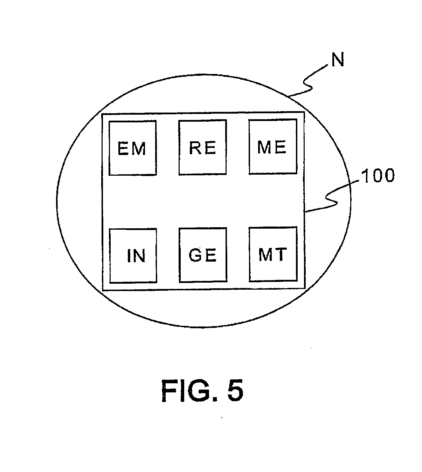

La figure 5 représente un schéma fonctionnel d'un noeud. Un noeud N comporte un dispositif de réception/transmission 100. Le dispositif de réception/transmission 100, que ce dernier soit embarqué ou non dans un noeud émetteur, un noeud destinataire ou un noeud voisin, comporte un module EM d'émission. Ce module EM d'émission permet de générer un signal de communication. Le signal généré peut correspondre à un préambule ou à des données tels que décrits précédemment.

Le dispositif de réception/transmission 100 comporte également un module RE de réception d'un signal de communication similaire à celui décrit ci-dessus.

Le dispositif de réception/transmission 100 comporte un module ME d'écoute d'un canal de transmission sur lequel sont véhiculés des signaux de communication correspondant à un préambule ou à des données. Le module ME d'écoute peut être-incorporé dans le module RE de réception.

Le dispositif de réception/transmission 100 comporte un module IN d'interprétation du contenu d'un préambule. Le module IN peut notamment lire les informations comprises dans un préambule.

Le dispositif de réception/transmission 100 comporte également un module GE de génération qui permet de générer une information à intégrer dans un préambule et de modifier le contenu d'un préambule.

En outre, le dispositif de réception/transmission 100 comporte des moyens MT aptes à mesurer le temps.

Le dispositif de réception/transmission 100 comprend également une unité de commande, non représentée, connectée à chacun des modules EM, RE, ME, IN, GE ainsi qu'aux moyens MT et adaptée pour commander leur fonctionnement.

Les différents modules et moyens décrits ci-dessus sont aptes à mettre en oeuvre les étapes du procédé décrit précédemment.

Le dispositif de réception/transmission 100 peut ainsi effectuer grâce au module EM d'émission un relais de l'émission d'un préambule. Un relais correspond à l'émission d'un préambule formé à partir du préambule émis au cours d'un relais précédent. La formation d'un préambule est réalisée par le module GE de génération. Le préambule émis lors du premier relais est formé à partir du préambule initial et le relais est assuré jusqu'à ce que le noeud destinataire des données détecte le préambule émis.

Les modules EM, RE, ME, IN, GE et les moyens MT peuvent être des modules logiciels formant un programme d'ordinateur. L'invention concerne donc également un programme d'ordinateur comprenant des instructions logicielles pour faire exécuter par un noeud le procédé précédemment décrit.

Le module logiciel peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

L'invention peut être mise en oeuvre dans des réseaux ad hoc et plus particulièrement dans des réseaux de capteurs. Les capteurs, correspondant aux noeuds, peuvent être des sondes de température, de pression, etc.

## Revendications

1. Procédé de transmission de données, dans un réseau comportant une pluralité de noeuds respectant alternativement des périodes d'endormissement et des périodes d'éveil de façon asynchrone les uns par rapport aux autres, et reposant sur une technique d'endormissement des noeuds avec échantillonnage de préambule, ledit procédé mis en oeuvre par un premier noeud étant **caractérisé en ce qu'**il comprend les étapes suivantes :
réception d'un premier préambule émis par au moins un noeud émetteur, le premier préambule comportant au moins un premier ensemble d'informations relatives à une transmission par le noeud émetteur d'un premier ensemble de données vers un noeud destinataire ;
modification du premier préambule en ajoutant un deuxième ensemble d'informations relatives à la transmission d'un deuxième ensemble de données par le premier noeud ;
transmission du premier préambule ainsi modifié avant la transmission du premier ensemble de données ; et
transmission, vers le noeud destinataire ou vers un deuxième noeud, du deuxième ensemble de données à l'issue de la transmission du premier ensemble de données.

2. Procédé selon la revendication 1, **caractérisé en ce que** le premier préambule comprend une indication relative à un mode de mutualisation de préambule, ladite indication appartenant à un groupe comprenant un mode de mutualisation à unique destinataire et un mode de mutualisation à plusieurs destinataires.

3. Procédé selon la revendication 2, **caractérisé en ce que** l'indication relative à un mode de mutualisation de préambule correspond au mode de mutualisation à unique destinataire et **en ce que** le deuxième ensemble d'informations ajouté est relatif à une transmission du deuxième ensemble de données par le premier noeud vers le noeud destinataire, le deuxième ensemble de données étant transmis au cours de l'étape de transmission, vers le noeud destinataire ou vers le deuxième noeud, du deuxième ensemble de données à l'issue de la transmission du premier ensemble de données.

4. Dispositif de transmission de données adapté à être intégré dans un réseau comportant une pluralité de noeuds respectant alternativement des périodes d'endormissement et des périodes d'éveil, de façon asynchrone les uns par rapport aux autres, et reposant sur une technique d'endormissement des noeuds avec échantillonnage de préambule, **caractérisé en ce qu'**il comporte
des moyens de réception aptes à recevoir un premier préambule émis par au moins un noeud émetteur, le premier préambule comportant au moins un premier ensemble d'informations relatives à une transmission par le noeud émetteur d'un premier ensemble de données vers un noeud destinataire ;
des moyens de modification du premier préambule en ajoutant un deuxième ensemble d'informations relatives à la transmission d'un deuxième ensemble de données par le premier noeud ;
des moyens de transmission du premier préambule ainsi modifié avant la transmission du premier ensemble de données ; et
des moyens de transmission aptes à transmettre, vers le noeud destinataire ou vers un deuxième noeud, du deuxième ensemble de données à l'issue de la transmission du premier ensemble de données.

5. Procédé de réception par un noeud d'un préambule, transmis par au moins un premier noeud par un procédé selon la revendication 1, ledit procédé comportant les étapes suivantes, réalisées par ledit noeud:
• réception du préambule ;
• extraction d'informations comprises dans le préambule annonçant au moins la transmission du premier et du deuxième ensemble de données à un noeud destinataire ;
• si le noeud est le noeud destinataire annoncé dans le préambule, réception du premier et du deuxième ensemble de données.

6. Procédé selon la revendication 5, comprenant en outre une étape d'attente d'autres ensembles de données suite à la réception des premier et deuxième ensembles de données.

7. Procédé de réception selon la revendication 5, **caractérisé en ce qu'**il comprend les étapes suivantes :
• extraction d'informations comprises dans le préambule comprenant une indication relative au mode de mutualisation de préambule, ladite indication appartenant à un groupe comprenant un mode de mutualisation à unique destinataire et un mode de mutualisation à plusieurs destinataires ;
• si le noeud n'est pas le noeud destinataire, endormissement pour une période calculée en fonction de ladite indication.

8. Procédé de réception selon la revendication 7, **caractérisé en ce que** si le noeud n'est pas le noeud destinataire annoncé et si le mode de mutualisation du préambule indiqué est à plusieurs destinataires, ledit procédé comprend les étapes suivantes :
• endormissement jusqu'au début de la transmission du premier ensemble de données ;
• réception de données descriptives en provenance du noeud émetteur ;
• si les données descriptives comportent des informations indiquant que le noeud est le destinataire d'un ensemble de données, réception dudit ensemble de données.

9. Procédé selon la revendication 8, **caractérisé en ce que** ledit procédé comprend une étape d'endormissement après la réception des données descriptives si les données descriptives ne comportent aucune information relative à la transmission d'un ensemble de données au noeud.

10. Dispositif de réception d'un préambule, transmis par au moins un premier noeud par un procédé selon la revendication 1, **caractérisé en ce qu'**il comporte :
• des moyens de réception du préambule ;
• des moyens d'extraction d'informations comprises dans le préambule annonçant au moins la transmission du premier et du deuxième ensemble de données à un destinataire ;
• des moyens de réception aptes à recevoir le premier et le deuxième ensemble de données, si le dispositif est le destinataire annoncé dans le préambule.

11. Noeud dans un réseau comportant une pluralité de noeuds respectant alternativement des périodes d'endormissement et des périodes d'éveil de façon asynchrone les uns par rapport aux autres, et reposant sur une technique d'endormissement des noeuds avec échantillonnage de préambule, **caractérisé en ce qu'**il comprend un dispositif de transmission selon la revendication 4 et un dispositif de réception selon la revendication 10.

12. Programme d'ordinateur comportant des instructions pour mettre en oeuvre le procédé de transmission selon la revendication 1 lorsque le programme est exécuté par un ordinateur.

13. Programme d'ordinateur comportant des instructions pour mettre en oeuvre le procédé de réception selon la revendication 5 lorsque le programme est exécuté par un ordinateur.

## Patentansprüche

1. Verfahren zum Übertragen von Daten in einem Netz, das mehrere Knoten umfasst, die abwechselnd Einschlafperioden und Aufwachperioden auf relativ zueinander asynchrone Weise gehorchen und auf einer Technik des Einschlafens der Knoten mit Kopfsatzabtastung beruhen, wobei das Verfahren, das von einem ersten Knoten ausgeführt wird, **dadurch gekennzeichnet ist, dass** es die folgenden Schritte umfasst:
Empfangen eines ersten Kopfsatzes, der von wenigstens einem Senderknoten ausgesendet wird, wobei der erste Kopfsatz wenigstens eine erste Gesamtheit von Informationen bezüglich einer Übertragung durch den Senderknoten einer ersten Gesamtheit von Daten zu einem Adressatknoten enthält;
Modifizieren des ersten Kopfsatzes durch Hinzufügen einer zweiten Gesamtheit von Informationen bezüglich der Übertragung einer zweiten Gesamtheit von Daten durch den ersten Knoten;
Übertragen des somit modifizierten ersten Kopfsatzes vor dem Übertragen der ersten Gesamtheit von Daten; und
Übertragen der zweiten Gesamtheit von Daten am Ende der Übertragung der ersten Gesamtheit von Daten zu dem Adressatknoten oder zu einem zweiten Knoten.

2. Verfahren nach Anspruch 1, **dadurch gekennzeichnet, dass** der erste Kopfsatz eine Angabe bezüglich einer Betriebsart zur gemeinsamen Nutzung des Kopfsatzes enthält, wobei die Angabe zu einer Gruppe gehört, die eine Betriebsart zur gemeinsamen Nutzung mit eindeutigem Adressaten und eine Betriebsart zur gemeinsamen Nutzung mit mehreren Adressaten umfasst.

3. Verfahren nach Anspruch 2, **dadurch gekennzeichnet, dass** die Angabe bezüglich einer Betriebsart zur gemeinsamen Nutzung des Kopfsatzes einer Betriebsart zur gemeinsamen Nutzung mit eindeutigem Adressaten entspricht und dass die hinzugefügte zweite Gesamtheit von Informationen auf eine Übertragung der zweiten Gesamtheit von Daten durch den ersten Knoten zu dem Adressatknoten bezogen ist, wobei die zweite Gesamtheit von Daten im Verlauf des Übertragungsschrittes zu dem Adressatknoten oder zu dem zweiten Knoten der zweiten Gesamtheit von Daten am Ende der Übertragung der ersten Gesamtheit von Daten übertragen wird.

4. Datenübertragungsvorrichtung, die dafür ausgelegt ist, in ein Netz integriert zu werden, das mehrere Knoten umfasst, die abwechselnd Einschlafperioden und Aufwachperioden auf relativ zueinander asynchrone Weise gehorchen und auf einer Technik des Einschlafens der Knoten mit Kopfsatzabtastung beruhen, **dadurch gekennzeichnet, dass** sie Folgendes umfasst:
Empfangsmittel, die dafür ausgelegt sind, einen ersten Kopfsatz zu empfangen, der von wenigstens einem Senderknoten ausgesendet wird, wobei der erste Kopfsatz wenigstens eine erste Gesamtheit von Informationen bezüglich einer Übertragung einer ersten Gesamtheit von Daten zu einem Adressatknoten durch den Senderknoten enthält;
Mittel zum Modifizieren des ersten Kopfsatzes durch Hinzufügen einer zweiten Gesamtheit von Informationen bezüglich der Übertragung einer zweiten Gesamtheit von Daten zu dem ersten Knoten;
Mittel zum Übertragen des somit modifizierten ersten Kopfsatzes vor dem Übertragen der ersten Gesamtheit von Daten; und
Übertragungsmittel, die dafür ausgelegt sind, die zweite Gesamtheit von Daten am Ende der Übertragung der ersten Gesamtheit von Daten zu dem Adressatknoten oder zu einem zweiten Knoten zu übertragen.

5. Verfahren zum Empfangen durch einen Knoten eines Kopfsatzes, der von wenigstens einem ersten Knoten durch ein Verfahren nach Anspruch 1 übertragen wird, wobei das Verfahren die von dem Knoten ausgeführten folgenden Schritte umfasst:
- Empfangen des Kopfsatzes;
- Extrahieren von Informationen, die in dem Kopfsatz enthalten sind und wenigstens die Übertragung der ersten und der zweiten Gesamtheit von Daten zu einem Adressatknoten ankündigen;
- falls der Knoten der in dem Kopfsatz angekündigte Adressatknoten ist, Empfangen der ersten und der zweiten Gesamtheit von Daten.

6. Verfahren nach Anspruch 5, das außerdem einen Schritt des Abwartens anderer Gesamtheiten von Daten nach dem Empfang der ersten und der zweiten Gesamtheit von Daten umfasst.

7. Empfangsverfahren nach Anspruch 5, **dadurch gekennzeichnet, dass** es die folgenden Schritte umfasst:
- Extrahieren von Informationen, die in dem Kopfsatz enthalten sind und eine Angabe bezüglich einer Betriebsart zur gemeinsamen Nutzung des Kopfsatzes enthalten, wobei die Angabe zu einer Gruppe gehört, die eine Betriebsart zur gemeinsamen Nutzung mit eindeutigem Adressaten und eine Betriebsart zur gemeinsamen Nutzung mit mehreren Adressaten umfasst;
- falls der Knoten nicht der Adressatknoten ist, Einschlafen für eine berechnete Periode als Funktion der Angabe.

8. Empfangsverfahren nach Anspruch 7, **dadurch gekennzeichnet, dass** dann, wenn der Knoten nicht der angekündigte Adressatknoten ist und wenn die angegebene Betriebsart zur gemeinsamen Nutzung des Kopfsatzes mehrere Adressaten hat, das Verfahren die folgenden Schritte umfasst:
- Einschlafen bis zum Beginn der Übertragung der ersten Gesamtheit von Daten;
- Empfangen deskriptiver Daten, die von dem Senderknoten stammen;
- falls die deskriptiven Daten Informationen enthalten, die angeben, dass der Knoten der Adressat einer Gesamtheit von Daten ist, Empfangen der Gesamtheit von Daten.

9. Verfahren nach Anspruch 8, **dadurch gekennzeichnet, dass** das Verfahren einen Schritt des Einschlafens nach dem Empfangen der deskriptiven Daten umfasst, falls die deskriptiven Daten keinerlei Informationen bezüglich der Übertragung einer Gesamtheit von Daten zu dem Knoten enthalten.

10. Vorrichtung zum Empfangen eines Kopfsatzes, der von wenigstens einem ersten Knoten durch ein Verfahren nach Anspruch 1 übertragen wird, **dadurch gekennzeichnet, dass** sie Folgendes umfasst:
- Mittel zum Empfangen des Kopfsatzes;
- Mittel zum Extrahieren von Informationen, die in dem Kopfsatz enthalten sind und wenigstens die Übertragung der ersten und der zweiten Gesamtheit von Daten zu einem Adressaten ankündigen;
- Empfangsmittel, die dafür ausgelegt sind, die erste und die zweite Gesamtheit von Daten zu empfangen, falls die Vorrichtung der in dem Kopfsatz angekündigte Adressat ist.

11. Knoten in einem Netz, das mehrere Knoten enthält, die abwechselnd Einschlafperioden und Aufwachperioden auf relativ zueinander asynchrone Weise gehorchen und auf einer Technik des Einschlafens der Knoten mit Kopfsatzabtastung beruhen, **dadurch gekennzeichnet, dass** er eine Übertragungsvorrichtung nach Anspruch 4 und eine Empfangsvorrichtung nach Anspruch 10 umfasst.

12. Computerprogramm, das Befehle enthält, um das Übertragungsverfahren nach Anspruch 1 auszuführen, wenn das Programm von einem Computer ausgeführt wird.

13. Computerprogramm, das Befehle enthält, um das Empfangsverfahren nach Anspruch 5 auszuführen, wenn das Programm von einem Computer ausgeführt wird.

## Claims

1. Method of transmission of data in a network including a plurality of nodes alternating sleeping periods and waking periods asynchronously with respect to each other and based on a technique of putting the nodes to sleep and preamble sampling, said method implemented by a first node being **characterized in that** it includes the following steps:
reception of a first preamble transmitted by at least one transmitter node, the first preamble including at least one first set of information relating to transmission by the transmitter node of a first set of data to a destination node;
modification of the first preamble by adding a second set of information relating to the transmission of a second set of data by the first node;
transmission of the first preamble modified in this way before the transmission of the first set of data; and
transmission to the destination node or to a second node of the second set of data after transmission of the first set of data.

2. Method according to Claim 1, **characterized in that** the first preamble includes an indication relating to a preamble mutualization mode, said indication belonging to a group comprising a single destination mutualization mode and a multiple destination mutualization mode.

3. Method according to Claim 2, **characterized in that** the indication relating to a preamble mutualization mode corresponds to the single destination mutualization mode and **in that** the second set of information added relates to a transmission of the second set of data by the first node to the destination node, the second set of data being transmitted during the step of transmission to the destination node or to the second node of the second set of data after transmission of the first set of data.

4. Data transmission device adapted to be integrated into a network including a plurality of nodes alternating sleeping periods with waking periods asynchronously with respect to each other and based on a technique of putting the node to sleep and preamble sampling, **characterized in that** it includes:
receiving means adapted to receive a first preamble transmitted by at least one transmitter node, the first preamble including at least one first set of information relating to transmission by the transmitter node of a first set of data to a destination node;
means for modifying the first preamble by adding a second set of information relating to the transmission of a second set of data by the fist node;
means for transmitting the first preamble modified in this way before the transmission of the first set of data; and
transmission means adapted to transmit to the destination node or to a second node the second set of data after transmission of the first set of data.

5. Method of reception by a node of a preamble transmitted by at least a first node by a method according to Claim 1, said method including the following steps implemented by said node:
• reception of the preamble;
• extraction of information included in the preamble announcing at least the transmission of the first and the second sets of data to a destination node;
• if the node is the destination node announced in the preamble, reception of the first and second sets of data.

6. Method according to Claim 5, further including a step of awaiting other sets of data following reception of the first and second sets of data.

7. Reception method according to Claim 5, **characterized in that** it includes the following steps:
• extraction of information included in the preamble including an indication relating to the preamble mutualization mode, said indication belonging to a group comprising a single destination mutualization mode and a multiple destination mutualization mode;
• if the node is not the destination node, sleeping for a period calculated as a function of said indication.

8. Reception method according to Claim 7, **characterized in that** if the node is not the destination node announced and if the preamble mutualization mode indicated is the multiple destination mode, said method includes the following steps:
• sleeping until the beginning of the transmission of the first set of data;
• reception of descriptive data coming from the transmitter node;
• if the descriptive data includes information indicating that the node is the destination of a set of data, reception of said set of data.

9. Method according to Claim 8, **characterized in that** said method includes a step of sleeping after the reception of the descriptive data if the descriptive data does not include any information relating to the transmission of a set of data to the node.

10. Device for receiving a preamble transmitted by at least one first node by a method according to Claim 1, **characterized in that** it includes:
• means for receiving the preamble;
• means for extraction of information included in the preamble announcing at least the transmission of the first and the second sets of data to a destination;
• receiver means adapted to receive the first and the second sets of data if the device is the destination announced in the preamble.

11. Node in a network including a plurality of nodes alternating sleeping periods and waking periods asynchronously relative to each other and based on a technique of putting the nodes to sleep and preamble sampling, **characterized in that** it includes a transmitter device according to Claim 4 and a receiver device according to Claim 10.

12. Computer program including instructions for implementing the transmission method according to Claim 1 when the program is executed by a computer.

13. Computer program including instructions for implementing the reception method according to Claim 5 when the program is executed by a computer.
